# EUROPEAN PATENT APPLICATION

(11) **EP 0 673 035 A2**
(43) Date of publication of application: **20.09.1995**
(21) Application number: 94120291.3
(22) Date of filing: 21.12.1994
(51) Int. Cl.: G11B 33/12, G11B 25/04

(54) **Magnetic disk drive**

(30) Priority: 15.03.1994 JP 43541/94
(71) Applicant: HITACHI, LTD., Chiyoda-ku, Tokyo 101 (JP)
(72) Inventor: Hanada, Kazuyoshi, Hadano-shi (JP); Amano, Hideaki, Odawara-shi (JP)
(74) Representative: Patentanwälte Beetz - Timpe - Siegfried Schmitt-Fumian - Mayr

(57) **Abstract**

There is provided a region at a corner of a head disk assembly (17) which region includes a recess, a hole or a threaded hole (1a) into which a connection member for fixing a magnetic disk drive is to be inserted inside the drive through a surface thereof from the exterior. With this construction, the mounting of the drive can be effected with a sufficient strength. Moreover, various mounting requirements can be satisfied while maintaining the same performance as conventionally obtained, and also achieving a compact and thin design, a power-saving design and a low-cost design of the drive.

## Description

### BACKGROUND OF THE INVENTION

The present invention relates generally to a magnetic disk drive which is one of memory devices for use in a computer system, and more particularly to a magnetic disk drive having a mounting structure which enables the magnetic disk drive to have a compact and thin size, less power consumption and a low manufacturing cost.

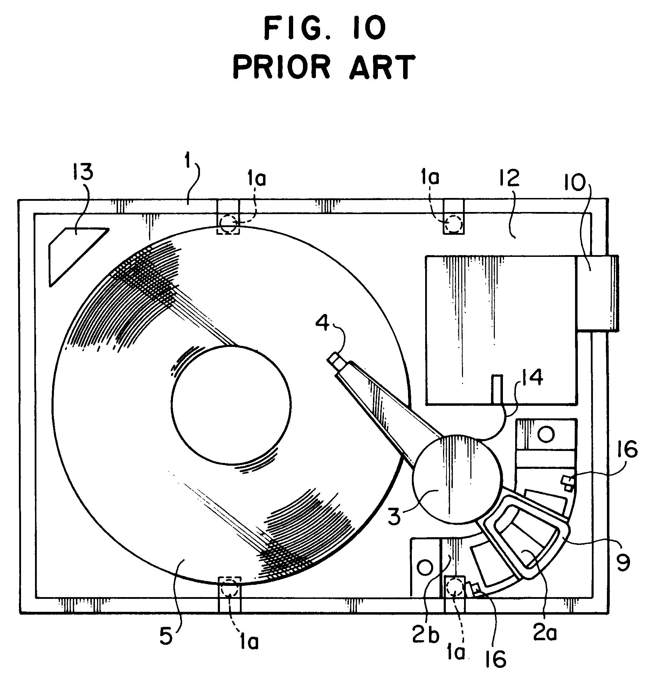

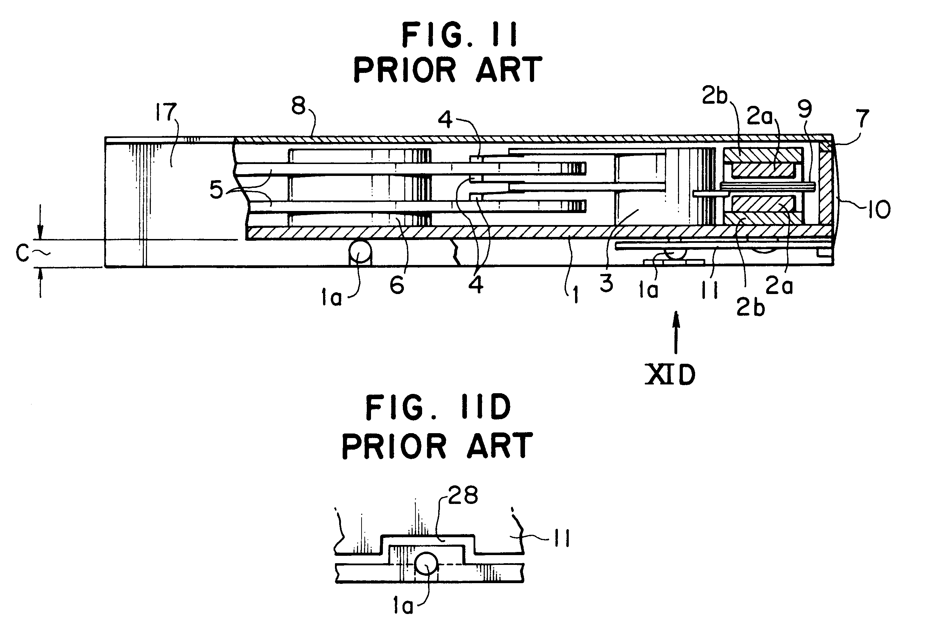

Fig. 10 shows a conventional magnetic disk drive, and Fig. 11 is a cross-sectional view thereof. Fig. 10 is a top plan view without a cover 8 (Fig. 11).

Basically, the magnetic disk drive has a head disk assembly (hereinafter referred to as "HDA"), and a circuit board 11 (Fig. 11) for controlling it. The HDA includes magnetic disks 5 (Fig. 10) each of which comprises a substrate of aluminum or glass with magnetic films formed on respective surfaces thereof for magnetically storing information, magnetic heads 4 each of which comprises a thin film of ferrite or metal as a main material and flies a microscopic height (about 0.1 µm) above the surface of the associated magnetic disk 5 so as to magnetically write information on or read information from the magnetic disk 5, a carriage 3 of aluminum or magnesium for precisely positioning the magnetic heads 4 in the radial direction of the magnetic disks 5, a coil 9 of aluminum or copper wound for moving the carriage 3, a voice coil motor 2 having magnets 2a, and a stopper 16 (Fig. 10) for preventing the magnetic heads 4 from damaging the magnetic disks 5 in the event of an abnormal condition in which the carriage 3 has a reckless run when current of more than a predetermined level flows through the coil 9.

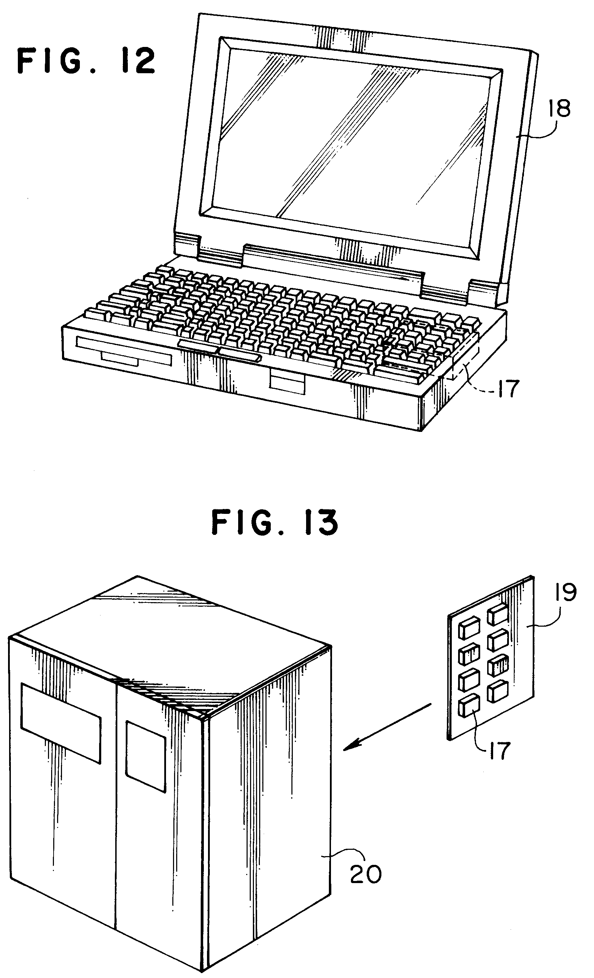

Heretofore, as means for mounting the drive 17 (Figs. 12 and 13) on a casing of a host device, there are examples disclosed in Japanese Patent Unexamined Publication No. 2-10576 (hereinafter referred to as "first conventional art") and Japanese Patent Unexamined Publication No. 3-176877 (hereinafter referred to as "second conventional art").

It is expected that a wide variety of methods of mounting the magnetic disk drive will be developed from now on.

With a larger-capacity and compact design of the magnetic disk drive developed, there has now been an increasing demand for a drive 17 of a thin design to be mounted in a notebook-type personal computer 18 (Fig. 12), and there is a tendency for the magnetic disk drive to become more compact and thinner.

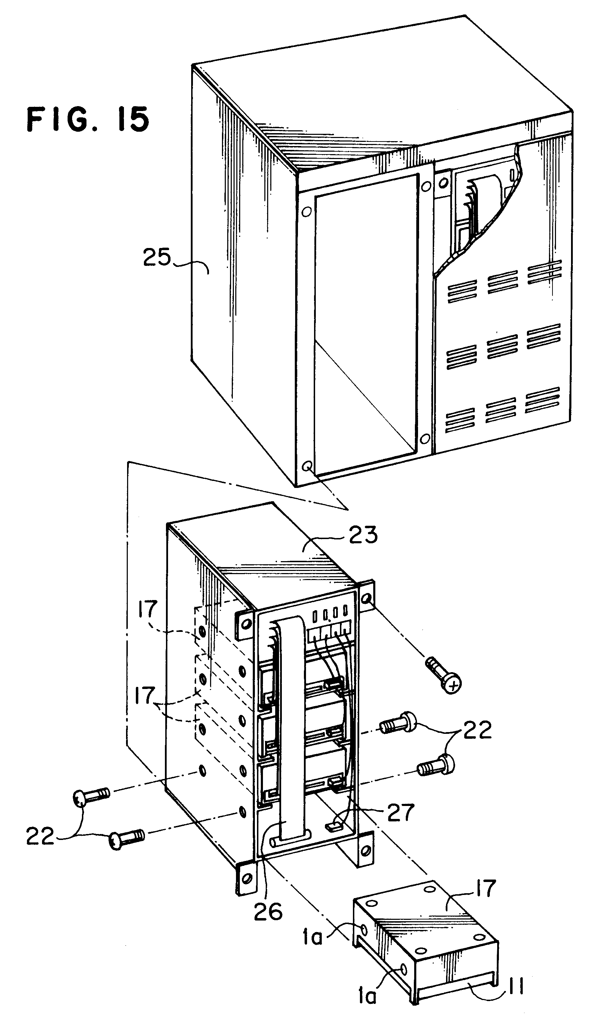

The notebook-type personal computer 18, which can be supplied with power not only from a conventional power source but also from a battery for enabling its use even in a situation where no conventional power source is available, has now become the mainstream. Therefore, the power-saving design has now become essential. On the other hand, with respect to (1) HDA mounted on a control board 19 of a large-size computer 20 (Fig. 13) which requires a large capacity for image processing and so on and (2) magnetic disk drives 17 mounted, as add-in memories for the large-size computer 20, within a casing 23 (Fig. 15) of a magnetic disk array device 25, it is essential that the processing speed (access time) should be high. And besides, the drives 17 in either computer are naturally required to have a low-cost design.

With the improvement in compact design and performance due to the progress in a thin film technology for the magnetic head 4, the recording density per surface of the magnetic disk 5 has been improved. Therefore, it has been possible to reduce the diameter of the magnetic disk and the space between adjacent magnetic disks, and the thin design as well as the compact design has been achieved while maintaining the same performance as conventionally obtained.

At first, a drive 17, having magnetic disks 5 of 8-inch diameter mounted thereon, came into the market as a single unit. Thereafter, the volume of the drive 17 has sequentially been reduced by 1/4 times, and a magnetic disk drive 17 of a thin type having a half height of the conventional drive has been produced.

In the second conventional art, a frame is provided so that external vibration or impact will not cause the head 4 to damage the magnetic disk 5, and HDA is fixed to this frame through an absorber. For this reason, mounting holes used for mounting the drive 17 on the casing of the host device are formed in the frame (not shown). A circuit board 11 is fixedly secured to the HDA or the frame by screws.

In the conventional construction, when the drive 17 suffers from an impact, the head 4 moves off the surface of the magnetic disk 5, and then strikes against the surface of the magnetic disk again, thus damaging the surface of the magnetic disk 5. This phenomenon has been improved as a result of the reduction of the weight (mass) of the head 4 due to the compact design of the head 4, so that an impact tolerance has been enhanced.

Since the head 4 has become lightweight, the HDA can be suitably mounted without the use of the absorber, and even when an external impact is applied, it can well withsand the same. As a result, the structure as shown in the first conventional art and Fig. 11 has become the mainstream.

More specifically, there has been adopted a mounting structure in which the above frame is omitted, and mounting holes 1a are formed in extension portions (designated at C in Fig. 11) which are disposed at the sides of the space where the circuit board 11 is provided. The extension portions are formed integrally with the HDA, and extend respectively from the opposite sides of the HDA in the direction of the height of the drive 17.

The positions of the mounting holes 1a (Fig. 11) in the conventional construction will now be described.

The positions and size of the mounting holes 1a, as well as the dimensions of the outermost shape of the drive 17, have been determined according to the diameter of the magnetic disks 5, and this standard has been adopted by every drive maker.

(1) One mounting hole 1a is in one extension portion (designated at C in Fig. 11) extending from the HDA in the direction of the height of the drive 17, and is at a position corresponding to the quasi-centered axis location of the magnetic disks 5, and (2) the other mounting hole 1a is in this extension portion C, and is at a position corresponding to the quasi-centered axis location of an axis of rotation of the carriage 3.

Two mounting holes 1a are also provided in the other extension portion at the other side of the drive 17, and are disposed at similar locations as described above for the one extension portion.

Four mounting holes are further provided respectively at locations (see Fig. 11D) perpendicular respectively to the above four mounting holes 1a so that the HDA can be fixedly mounted from the circuit board side. Thus, eight mounting holes are provided in all.

Because of the following technical and commercial background, the mounting holes 1a are provided at the sides of the space where the circuit board 11 is provided.

The spaces occupied respectively by the HDA and the circuit board 11 of the conventional drive 17 are different respectively from those of a currently-available drive. Moreover, with respect to the conventional circuit board 11, (1) chip parts for mounting on the conventional circuit board 11, such as a resistor, an IC and a capacitor, are larger in size than currently-available chip parts, and a surface-bonding technique as available at present did not exist, and (2) the LSI rate of the circuit was low in view of the cost, and therefore the space occupied by the conventional circuit board 11 was larger than at present, so that the space where the circuit board 11 was situated could provide regions for receiving mounting screws 22 more easily than at present.

Generally, in the conventional drive, two circuit boards 11 are provided in a two-stage manner. In the conventional drive 17, the frame must be provided as in the second conventional art, and therefore HDA can not be mounted directly on the casing 23 of the host device.

There has been another commercial background as follows.

At manufacturers (customers who buy the drives 17) who manufacture various different kinds of computer systems, the drives 17 of various makers need to be mounted in the same manner, that is, in the same position. When the drive makers put their products into the market, it has been necessary for every drive maker to provide a mounting structure of a predetermined size at the same position for a standardized drive 17 of any specific size. Therefore, although the size has been reduced to achieve a compact design, the positions of the mounting holes 1a have been predetermined.

Reference is now made to the reason why the mounting holes 1a are disposed on the line generally perpendicular to the axis of the magnetic disks 5 and on the line generally perpendicular to the axis of rotation of the carriage 3. In the case of fixing the drive to the casing 23 of the host device, within the HDA, the axis of a spindle motor 6, holding the magnetic disks 5 in a generally stacked manner, and the axis of rotation of the carriage 3, carrying the magnetic heads 4, are points of concentration of the weight of the drive 17, and these are the center axes of the drive portions.

On the other hand, with the conventional positions of the mounting holes 1a, the following problems arise in connection with the compact and thin design, power-saving design and low-cost design of the drive 17.

In the conventional construction, the mounting holes 1a (Fig. 11), as well as those regions (Fig. 10) of the drive 17 into which the mounting screws extend, are provided in the extension portions extending from the sides of the HDA at the sides of the space where the circuit board 11 is mounted.

Therefore, cut-outs or recesses 28 (Fig. 11D) have to be formed in the circuit board 11 in order to provide room for receiving the mounting screws entering from the exterior of the drive 17 and in order to enable the drive to be fixedly mounted from the circuit board side. This adversely affects the mounting efficiency.

Assuming that the drive 17 will be further reduced in size while mounting screws of the same size as that of the conventional mounting screws are used, a required number of threads for fixing the drive 17 can not be provided in the side surface portions (the extension from the side of the HDA) of the region where the circuit board 11 is mounted.

If the diameter and size of the screws are made smaller to achieve a compact design of the drive 17, a special, small tool must be used for attaching the drive 17 to the casing of the host device. This affects the efficiency of the mounting operation. The use of such small-size screws leads to an increased cost. Furthermore, a sufficient mounting strength can not be obtained.

Usually, spaces are present at arrises or corners of the region where the HDA is mounted. As the magnetic disks 5 have a circular shape, and as the carriage 3 is driven for rotational motion, these are contained in the region (space) of a rectangular parallelepipedic body so that the HDA can be easily mounted on the casing 23 of the host system. As a result, the spaces are present at the arrises. These spaces have not heretofore been effectively utilized. If these are present within the HDA as shown in Fig. 10, the larger the space around the magnetic disks 5 is, the larger the wind loss (which serves as a rotational load on the magnetic disk) is. As a result, the power consumption of the spindle motor 6 is increased, and this adversely affects the power-saving design.

As described above, in the mounting structures of the conventional drives, sufficient considerations have not been given to the compact and thin design, power-saving design and low-cost design of the magnetic disk drive.

### SUMMARY OF THE INVENTION

It is therefore an object of the invention to provide a magnetic disk drive which achieves a compact and thin design, a power-saving design and a low-cost design while maintaining the same performance as conventionally obtained.

The magnetic disk drive of the invention is so structured that regions where there are formed recesses, holes or threaded holes into each of which a connection member (e.g. a screw, a metal fitting, or a plastic molded member) for fixing a magnetic disk drive is to be inserted from the exterior of the drive, are provided at corners of a head disk assembly (HDA) and each region is located in a direction perpendicular or parallel to surfaces of magnetic disks.

To firmly fix the magnetic disk drive to a host device, although it is preferred to use screws or metal fittings, plastic molded members may be used in view of the compact and lightweight design of the magnetic disk drive.

The magnetic disk drive can be fixed with a sufficient strength by the use of the above connection members without using special screws, and therefore a compact and thin design, a power-saving design and a low-cost design can be achieved while maintaining the same performance as conventionally obtained.

### BRIEF DESCRIPTION OF THE DRAWINGS

Fig. 1 is a top plan view showing an embodiment of the invention with a cover removed;
Fig. 2 is a top plan view showing another embodiment of the invention with a cover removed;
Fig. 3 is a top plan view showing a further embodiment of the invention with a cover removed;
Fig. 4 is a cross-sectional view of the embodiment of Fig. 1 as seen from the side thereof;
Fig. 5 is a cross-sectional view of the embodiment of Fig. 2 as seen from the side thereof;
Fig. 6 is a cross-sectional view of the embodiment of Fig. 3 as seen from the side thereof;
Fig. 7 is a view explanatory of regions where the mounting is effected in the embodiment of Fig. 1;
Fig. 8 is a view showing an example in which the drive of Fig. 1 is fixed at the sides thereof;
Fig. 9 is a view showing another example in which the drive of Fig. 1 is fixed at the sides thereof;
Fig. 10 is a view showing a conventional mounting structure with a cover removed;
Fig. 11 is a cross-sectional view of the structure of Fig. 10 as seen from the side thereof;
Fig. 11D is a fragmentary bottom view of the structure of Fig. 11;
Fig. 12 is a view showing a notebook-type personal computer as a host device;
Fig. 13 is a view showing a large-size computer as a host device;
Fig. 14 is a diagram showing the relation between a wind loss of a magnetic disk and a power consumption of a spindle motor;
Fig. 15 is a view explanatory of a state where the drives of the invention are mounted on a magnetic disk array device; and
Fig. 16 is a view explanatory of a state where the drive of the invention is mounted on a notebook-type personal computer.

### DESCRIPTION OF THE PREFERRED EMBODIMENTS

A basic structure of a magnetic disk drive will be described in the following.

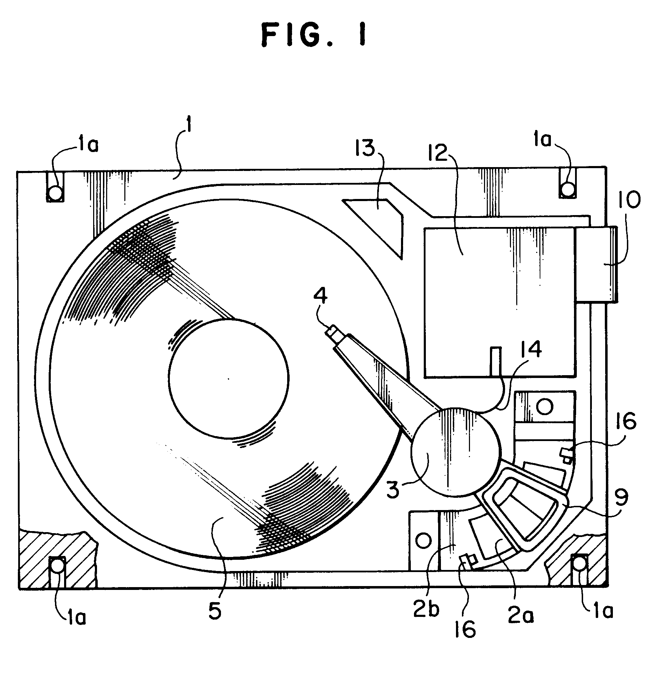

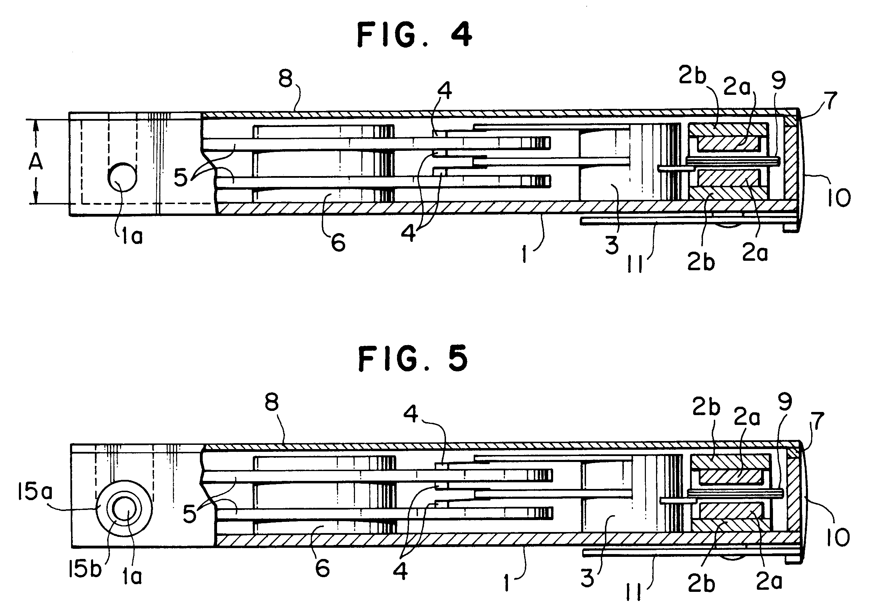

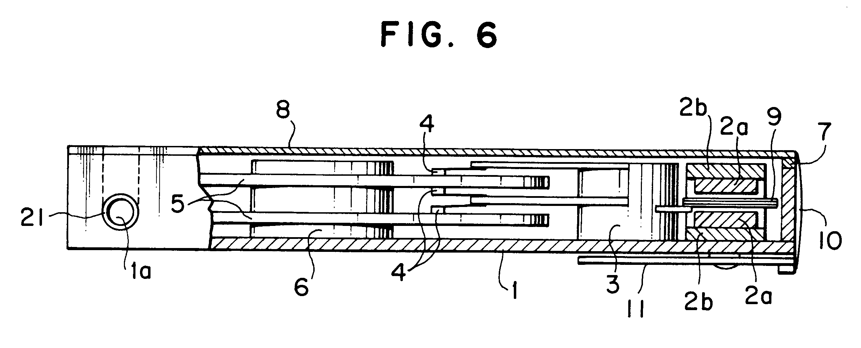

Each of magnetic disks 5 (Fig. 1) comprises a substrate of aluminum or glass with magnetic films formed on respective surfaces of the substrate for magnetically storing information. The magnetic disks 5 are driven for rotation by a spindle motor 6 (Figs. 4 to 6).

A magnetic head 4 flies over the associated surface of each magnetic disk 5 with a constant distance of about 0.1 µm kept therefrom so as to magnetically write or read information relative to the magnetic disk 5. A carriage 3 of aluminum or magnesium material is provided for precisely positioning the magnetic heads 4 above the respective surfaces of the magnetic disks 5. These components are driven and positioned by a voice coil motor 2 which comprises a coil 9 formed by winding a wire of aluminum or copper with an insulating film, permanent magnets 2a, and yokes 2b supporting the permanent magnets 2a and forming magnetic circuits.

Each magnetic head 4 is made of a material which is formed by ferrite or a thin metallic film having an electromagnetic coil for effecting a conversion between electrical signals and the magnetic field.

The driving of the above components will now be described.

The yokes 2b (Fig. 4), respectively extending over upper and lower sides of the coil 9, fix the magnets 2a thereon in such a manner that one magnet 2a, having a south pole relative to the coil 9, and the other magnet 2a, having a north pole relative to the coil 9, are disposed equidistant from the center of the angle of movement of the magnetic heads 4 (which read and write information relative to the surfaces of the magnetic disks 5) in a direction of rotation of the coil 9.

The polarities of the opposed magnets 2a are contrary to each other. With this arrangement, current is caused to flow through the coil 9 which is interposed between the magnets 2a and wound in the same direction, while controlling the amount of electric power and the direction of the current, thereby driving and positioning the carriage 3. Signals of each magnetic head 4 when heading and writing information are transmitted to a flexible printed circuit board FPC 14 (Fig. 1) through thin wires of an electromagnetic coil (not shown), which are provided on the head 4 and extend over the carriage 3, and the signals are further transmitted via a read/write control board 12 for controlling the read and write signals of the magnetic head 4 and a read/write FPC 10 to a circuit board 11 (Fig. 4) provided outside of HDA for controlling the drive 17.

The driving current for the coil 9 is transmitted to the circuit board 11 via the FPC 14 (Fig. 1). The axis of rotation of the spindle motor 6, the axis of rotation of the carriage 3, and the voice coil motor 2 (Fig. 4) are fixed to a base 1, and these are sealed by a cover 8 through a packing 7 to be isolated from the outside air.

In the above HDA in its operation state of effecting the reading or the writing between the magnetic heads 4 and the respective magnetic disk 5, in order to accurately process the signals, the electro-magnetic field should not be interrupted by dust or particles entering this space. Namely, the interior of the HDA should always be kept clean, and therefore an internal filter 13 (Fig. 1) is provided for arresting such dust through circulation of the air caused as a result of the rotation of the magnetic disks 5.

In order to meet requirements of a compact, large-capacity design, a high-density recording design and a high-speed design, the magnetic disk drive has the plurality of magnetic disks 5 mounted thereon. The magnetic heads 4 are provided for the associated surfaces of the magnetic disks 5, respectively. A magnetic disk spacer (not shown) is provided between adjacent magnetic disks 5. Surfaces of the carriage 3 for mounting the heads 4 are finished precisely, so that the heads 4 are kept spaced from one another at regular intervals.

Those regions, where recesses, holes or screw holes are provided for inserting connection members into the drive from the exterior through the surface of the drive 17 to fix the same, will now be described in detail with reference to Figs. 1 to 9.

In the following description, although an example of using screws as the connection members will be explained, other connection members than the screws, such as plastic or resin-molded connection members, may be used.

Fig. 1 is a top plan view of the embodiment of the invention with the cover 8 removed, showing the coil 9 by breaking the yoke 2b and the magnet 2a at the upper portion of the voice coil motor 2. Fig. 4 is a side-elevational view thereof.

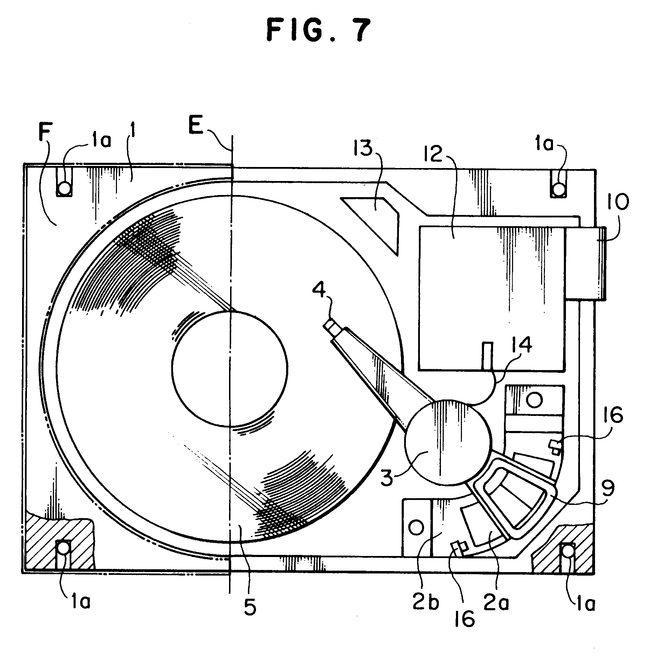

The positions of mounting holes 1a are located within regions which are defined by extending the dimension (designated at A in Fig. 4) of the outermost shape of the HDA, as measured between the inner surfaces of the HDA in a direction perpendicular to the surfaces of the magnetic disks 5, paralled to the secondly larger side wall of the HDA, and the positions are provided at corner portions of the HDA where the density of mounting of parts is conventionally low, as shown in Figs. 1 and 4. Namely, in the vicinity of the magnetic disks 5, the mounting holes 1a are in the side wall of the HDA, which is within the region F indicated by a thick dots-and-dash line in Fig. 7 between a centerline E (Fig. 7), which passes through the axis of rotation of the magnetic disks 5 in parallel relation to a shorter side of the largest rectangular surface of the rectangular parallelepipedic body defined by the outermost shape of the drive 17, and the outer surface of the drive 17 remote from the carriage 3, and which side wall does not interfer with the magnetic disks 5.

In order that the HDA can be fixed from the side of the HDA, that is, from the side facing away from the circuit board 11 as in the conventional construction, the mounting holes 1a are provided in one of the two largest surfaces of the rectangular parallelepipedic body, defined by the outermost shape of the drive 17, at which the HDA is exposed (Fig. 7). Heretofore, a magnetic disk drive has been formed into a compact construction, and therefore self-vibration as experienced in the conventional construction does not need to be taken into consideration. Despite this, the drive has been mounted by means of small, special screws at the conventional positions.

According to the invention, in view of the size of the conventional mounting screws 22 (Fig. 15), there is provided the construction (Figs. 1 to 3) in which the spaces at the corner portions of the HDA where the density of mounting of the parts is conventionally low are filled with the side walls of the cover 8 or the base 1, and the mounting holes 1a are formed in this region. Therefore, there are achieved advantages that the spaces at the corner portions of the HDA can be effectively used, and that the mounting holes 1a capable of providing a greater mounting strength than in the conventional construction can be ensured. Moreover, there is another advantage that even if the drive 17 is further improved in compact design and thin design, the conventional mounting screws 22, which are inexpensive and well accepted in the market, can still be used. It is preferred that the mounting holes 1a should not extend through the wall into the interior of the HDA so that the outside air will not intrude into the drive.

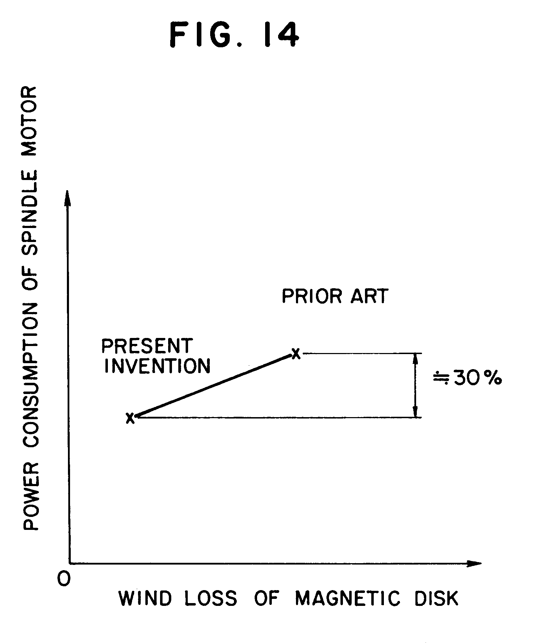

In the above construction, the spaces where the density of mounting of the parts is conventionally low are filled with the side walls of the cover 8 or the base 1, and the inner wall of the HDA around the magnetic disks 5 is spaced from the magnetic disks 5 a minimum distance not allowing the rotating magnetic disks 5 to contact the inner wall (Figs. 1 to 3). As a result, as shown in Fig. 14, the rotational resistance of the magnetic disks 5 is reduced, and because of the compact design, the power consumption is reduced about 30% as compared with the conventional construction of Fig. 10.

The cut-outs 28 (Fig. 11) in the circuit board 11 for the (four) mounting holes 1a, as well as the extension portions C (Fig. 11) extending from the sides of the region where the circuit board 11 is mounted, become unnecessary. Therefore, there is achieved an advantage that the circuit board 11 can be extended to the outermost shape of the drive 17.

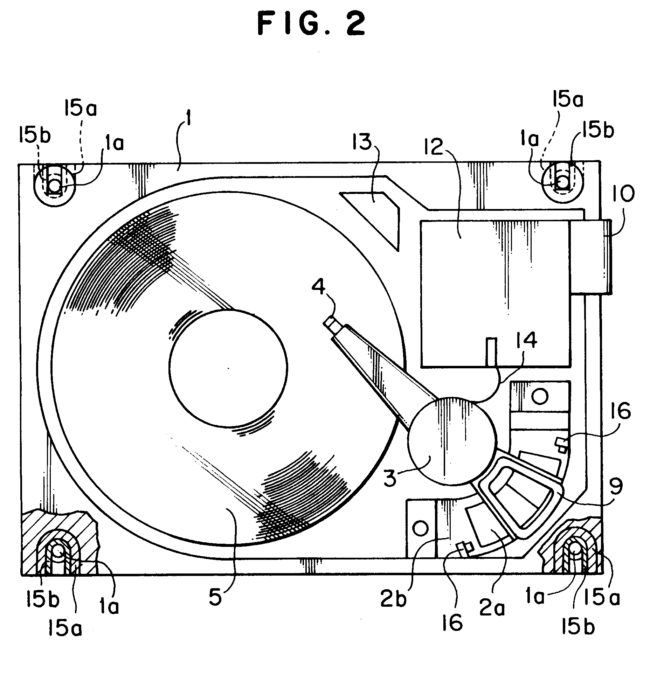

Fig. 2 shows another embodiment of the invention in which screw sockets 15b and shock mounts 15a are mounted on the base 1. Each screw socket 15b serves as a threaded portion for the associated mounting hole 1a, and has a sufficient strength to withstand external vibration or impact exerted on the drive 17. Each shock mount 15a comprises an absorber member which prevents external vibration or impact from being transmitted to its surrounding portions. With this construction, the vibration resistance and impact resistance of the drive 17 can be further improved. In this case, it is necessary that a gap, which is larger than the amount of deformation of the shock mount 15a due to external vibration or impact, should be provided between the casing 23 (Fig. 15) of the host device and the drive 17. Instead of the screws, plastics members equal to or higher in hardness than the shock mount may be used.

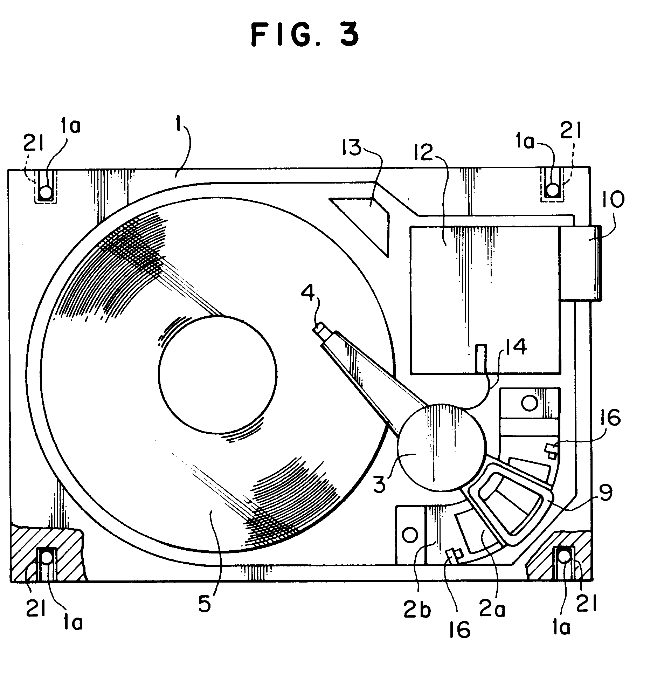

Fig. 3 shows a further embodiment of the invention in which insulating sockets 21, serving as threaded portions of the mounting holes 1a, respectively, are mounted on the base 1. Each insulating socket 21 comprises an isolation member having a sufficient strength to withstand external vibration or impact exerted on the drive 17. The insulation sockets 21 are used in the case where the drive 17 need to be insulated from the casing 23 of the host device.

Figs. 4, 5 and 6 are cross-sectional views as seen from the sides of the embodiments of Figs. 1, 2 and 3, respectively.

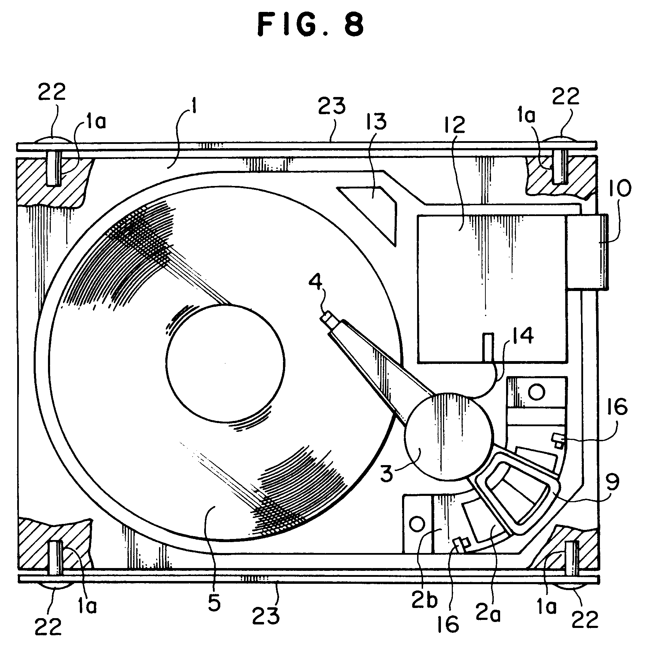

Fig. 8 shows an example in which the drive 17 of Fig. 1 is connected at its sides to the casing 23 of the host device by four mounting screws 22.

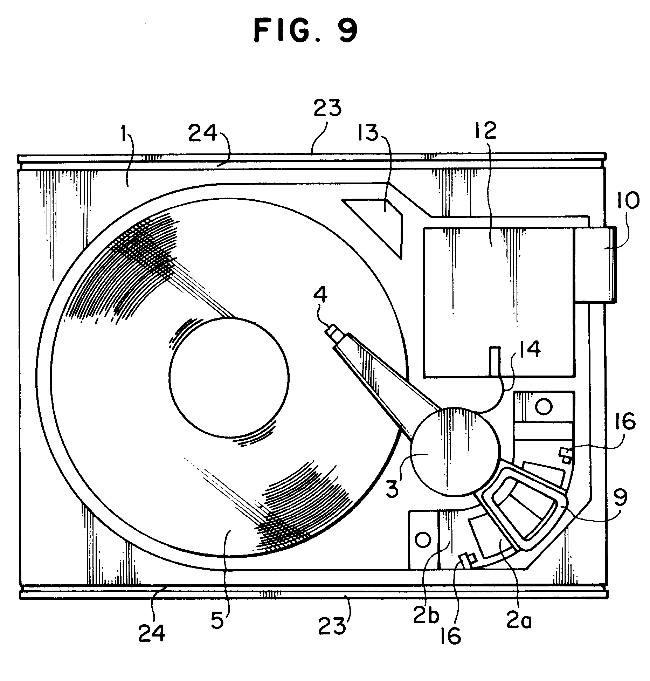

Fig. 9 shows an example in which the drive 17, which is sufficiently small and lightweight to enable the fixing without the use of mounting screws 22, is connected to the casing 23 of the host device by an adhesive through absorber sheets 24. The absorber sheets 24 are made of absorptive material which prevents external vibration or impact from being transmitted to the drive 17. The absorber sheet 24 may be used in combination with an insulating material if necessary. If the drive 17 itself can withstand external vibration or impact, the use of the absorber sheets 24 may be omitted, in which case the drive 17 is attached directly to the casing only by the adhesive.

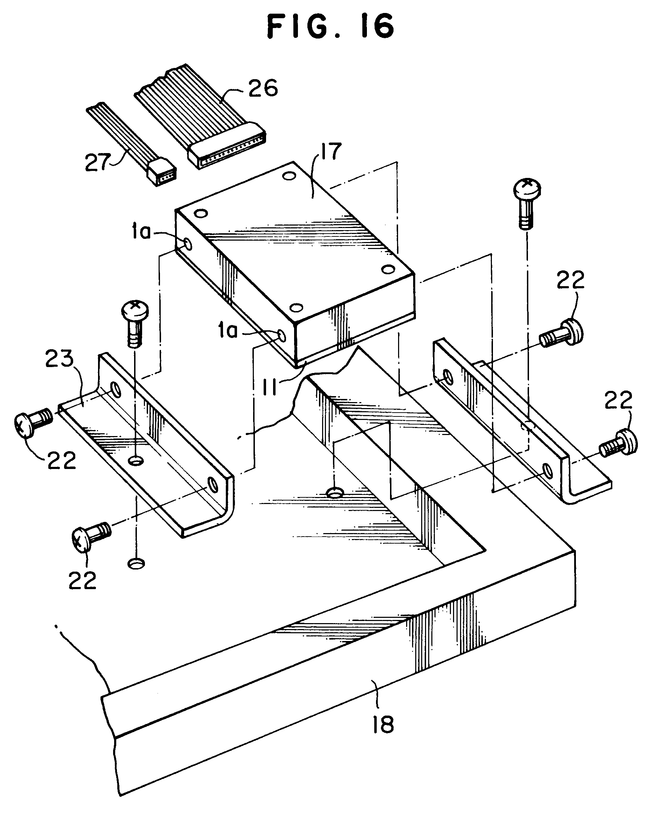

Examples in which the drive 17 is fixedly secured to the casing 23 of the host device will now be described with reference to Figs. 15 and 16, and in either case, the drive 17 is fixed at the sides thereof.

Fig. 16 shows the inside of a notebook-type personal computer 18. The drive 17 is fixedly secured to casing members 23 of the host device by mounting screws 22. In the case of the notebook-type personal computer 18, the casing members 23 need only to have a strength to enable the fixing of the drive 17. In the illustrated example of Fig. 16, the casing member 23 has an L-shaped cross-section. The drive is fixedly mounted within the notebook-type personal computer by screws, and an interface connector 26 and a power connector 27 are connected to the circuit board 11 of the drive 17.

In the example of Fig. 15, there is provided a magnetic disk array device 25 in which two casings 23 each containing four drives 17 are mounted. Thus, eight drives 17 in all can be mounted in this magnetic disk array device 25. Five or more drive 17 can be mounted in one casing in a similar manner.

An interface connector 26 for operating the four drives 17, as well as a power connector 27, is provided at an uppermost portion of each casing 23. The drives 17 are inserted in the casing 23, and are fixed by mounting screws 22, and the interface connector 26 and the power connector 27 are connected to the circuit boards 11 of the drives 17.

As described above, according to the invention, it is possible to provide the magnetic disk drive which achieves a compact and thin size, low power consumption and a low manufacturing cost while maintaining the same performance as conventionally obtained.

Having described the preferred embodiments of the invention with reference to the accompanying drawings, it is to be understood that the invention itself is not limited to the embodiments and that various changes and modifications could be effected therein by one skilled in the art without departing from the spirit or scope of the invention as defined in the appended claims.

## Claims

1. A magnetic disk drive having a converter-magnetic recording media assembly comprising: disk-shaped, rotatable recording media (5) for recording information; a converter (4, 12) for writing and reading the information relative to said recording media; a carriage (3) supporting said converter and moving the same; and a structure housing said recording media, said converter and said carriage therein in a manner to isolate them from outside air, wherein at least one region is provided at a corner of said assembly, which region includes a recess, a hole or a threaded hole (1a) into which a connection member for fixing the drive is to be inserted inside the drive from a surface thereof.

2. A magnetic disk drive according to claim 1, wherein said region including the recess, hole or threaded hole is provided at at least one location between a centerline, which passes through an axis of rotation of said magnetic disks in parallel relation to a shorter side of the largest rectangular surface of a rectangular parallelepipedic body defined by an outermost shape of the drive, and an outer surface of the drive remote from said carriage.

3. A magnetic disk drive according to claim 1, wherein said drive is arranged to be fixed on one of two largest surfaces of a rectangular parallelepipedic body, defined by an outermost shape of the drive, at which said assembly is exposed.

4. A magnetic disk drive according to claim 1, wherein a member (15a) for absorbing vibration and impact is provided near said recess, hole or threaded hole for mounting the drive.

5. A magnetic disk drive according to claim 1, wherein an insulating material (21) is provided near said recess, hole or threaded hole for mounting the drive.

6. A magnetic disk drive according to claim 1, wherein said assembly is fixedly mounted on a casing of a host device by an adhesive provided between said assembly and the casing.

7. A magnetic disk drive according to claim 1, wherein said recess, hole or threaded hole for mounting the drive is provided in a base (1) of said assembly.

8. A magnetic disk drive according to claim 1, wherein said recess, hole or threaded hole for mounting the drive is provided in a cover of said assembly.
